Europäisches Patentamt

(19) **European Patent Office** (11) Publication number: **0 232 698**

**Office européen des brevets** **A2**

(12) **EUROPEAN PATENT APPLICATION**

(21) Application number: **87100028.7** (51) Int. Cl.⁴: **C 09 D 9/00, C 11 D 7/30**

(22) Date of filing: **02.01.87**

(30) Priority: **03.01.86 US 815955**

(71) Applicant: **THE DOW CHEMICAL COMPANY, 2030 Dow Center Abbott Road P.O. Box 1967, Midland, MI 48640 (US)**

(43) Date of publication of application: **19.08.87 Bulletin 87/34**

(72) Inventor: **Vivian, Thomas A., 5315 Swede Road, Midland Michigan 48640 (US)**

(74) Representative: **Huber, Bernhard, Dipl.-Chem. et al, Patentanwälte H. Weickmann, Dr. K. Fincke F.A. Weickmann, B. Huber Dr. H. Liska, Dr. J. Prechtel Möhlstrasse 22 Postfach 860 820, D-8000 München 86 (DE)**

(84) Designated Contracting States: **AT BE CH DE ES FR GB GR IT LI LU NL SE**

(54) Cold cleaning and stripping compositions having reduced vapor emission.

㊗ This invention relates to compositions of matter useful for stripping paint and varnish and/or cleaning oil and grease from surfaces and substrates comprising the conventional industrial chlorinated solvents or the fluorochlorohydrocarbon (Freon) solvents, e.g. methylene chloride (dichloromethane), perchloroethylene, methylchloroform and mixtures thereof and a wax, such as paraffin wax, which composition is improved by the addition thereto of a novel class of evaporation retarding chemical compositions resulting in a far more effective stripping action and much improved environmentally desirable compositions. These compositions comprise a halogenated hydrocarbon, a natural or synthetic wax and at least one of ethylene carbonate, propylene carbonate, an organic silicon copolymer surface active compound, surface active compounds having an HLB of from 8 to 16 and/or a plasticizer.

STRIPPING OF PAINTED PANELS

ACTORUM AG

## COLD CLEANING AND STRIPPING
## COMPOSITIONS HAVING REDUCED VAPOR EMISSION

A large variety of formulations for stripping paints and varnishes, from various substrates, such as metal and/or wood, to enable the article or surface to be refinished, has employed methylene chloride (dichloromethane) as the base solvent. The normal additives which are added to these formulations to provide the desired degree of stability and shelf life, have been caustic soda, ammonia, other amines, acetic acid as activators, petroleum sulfonates and other surface active materials. Most of these additives have also been added to improve the ability of the formulations to penetrate the film-forming materials of the paints and varnishes. Petroleum sulfonates and other surface-active materials have also been added to assist in the removal of the loosened films during the water-rinsing operation and to prevent the water present in the formulation from phasing out.

The retardation of evaporation of most industrial solvents such as those used in cold cleaning processes and/or paint and varnish stripping compositions is becoming a necessity both from the

34,685A-F                    -1-

environmental standpoint as well as from the cost standpoint.

The industrial solvents, for example, methylene chloride, methylchloroform, perchloroethylene, mixtures of two or more of these solvents, the freons, such as Freon TF, a fluorochlorohydrocarbon manufactured by E.I. duPont de Nemours as well as mixtures of the freons with the chlorinated solvents, are well known to those skilled in the art. The characteristics of these solvents make them particularly desirable because of their substantially non-combustible characteristic at the normal temperatures of auxiliary equipment found in the work place. However, while most of these solvents are considered to be among the safest from the environmental standpoint, it is always desirable to reduce exposure of humans to their vapors, as well as reduce the volume of vapors to the ambient atmosphere. These solvents usually contain stabilizers and a few compositions, particularly those used for paint and varnish stripping, contain film formers, such as wax, to decrease the vaporization of the solvent and thus increase the effectiveness of the solubilizing effect of the liquidus state of these solvents on paints and varnishes.

The literature is filled with compositions and formulations which are purported to be substitutes for the methylene chloride-based paint and varnish strippers, a few of which have served a segment of the industry. For example, the water-based caustic formulated strippers, as well as the hydrocarbon/caustic-thickened compositions, find utility in certain applications where the evaporative rate of the methylene chloride-based strippers is too rapid for use, e.g. stripping of large or complex surfaces in the outdoor atmosphere. Each formulation has an advantage in some special industrial arena. However, the most universally used base for strippers is still the methylene chloride/wax mixture with or without a co-solvent which fills large vats where the article to be stripped of its coating is merely immersed and remains in the bath for a predetermined time interval. Upon withdrawal of the article, it is washed with water and/or brushed, wiped and/or flushed with water and/or fresh formulation. Since the use of large vats offers a large surface to the ambient atmosphere, large quantities of the methylene chloride and/or the co-solvent, such as methanol, are lost. Even with the addition of the waxes, the rate of evaporation is still quite high.

In other uses of these solvents, such as cold cleaning processes, it is usual to employ an open top container for the solvent composition. Evaporation from the container is controlled in large vats by condensing coils, but in small containers, often there is no means provided for controlling such evaporation except a lid in place during non-use.

While most of the halogenated solvents used in industry today, particularly methylene chloride and methylchloroform, are considered to be environmentally acceptable, health problems could occur from overexposure. The American Council of Governmental and Industrial Hygienists (ACGIH) threshold limit values for methylene chloride is 100 ppm. This is the time weighted average concentration of methylene chloride for a normal 8 hour work day and a 40 hour work week, to which all workers may be repeatedly exposed, day after day, without adverse effects. It would be most desirable from the human health standpoint to provide additives which would at least reduce the potential for greater exposure and to provide additives which would reduce the vapor potential to a considerable value less than the standard.

These and other advantages will become apparent to those skilled in the art to which the invention pertains from the following description and examples.

Figure 1 represents in graph form the differences in evaporation loss vs. time for a commercial stripping formulation as purchased and the same formulation to which was added the retardation package of the present invention, and a graph showing the average concentration of the vapors vs. time in the test box for the same formulations;

Figure 2 represents in graph form the average concentration vs. time in a small unventilated room in which stripping was carried out using each of the purchased formulations and the retardation package--modified purchased formulation;

Figures 3-10 illustrate in graph form the evaporation rate of various formulations of the halogenated solvents containing surface active agents of different HLB values and wax as the retardation package;

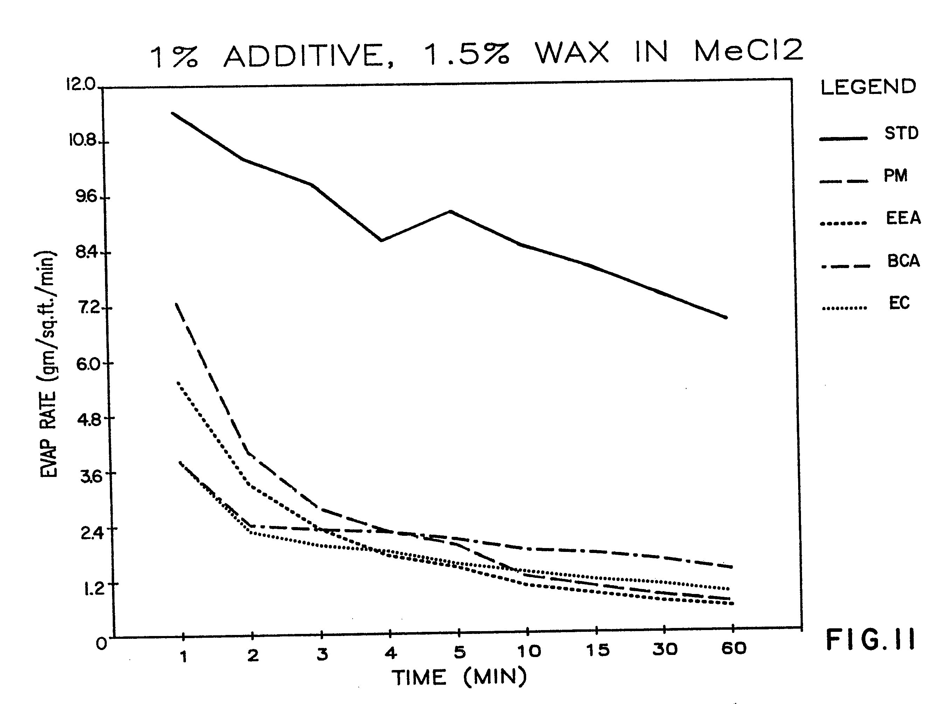

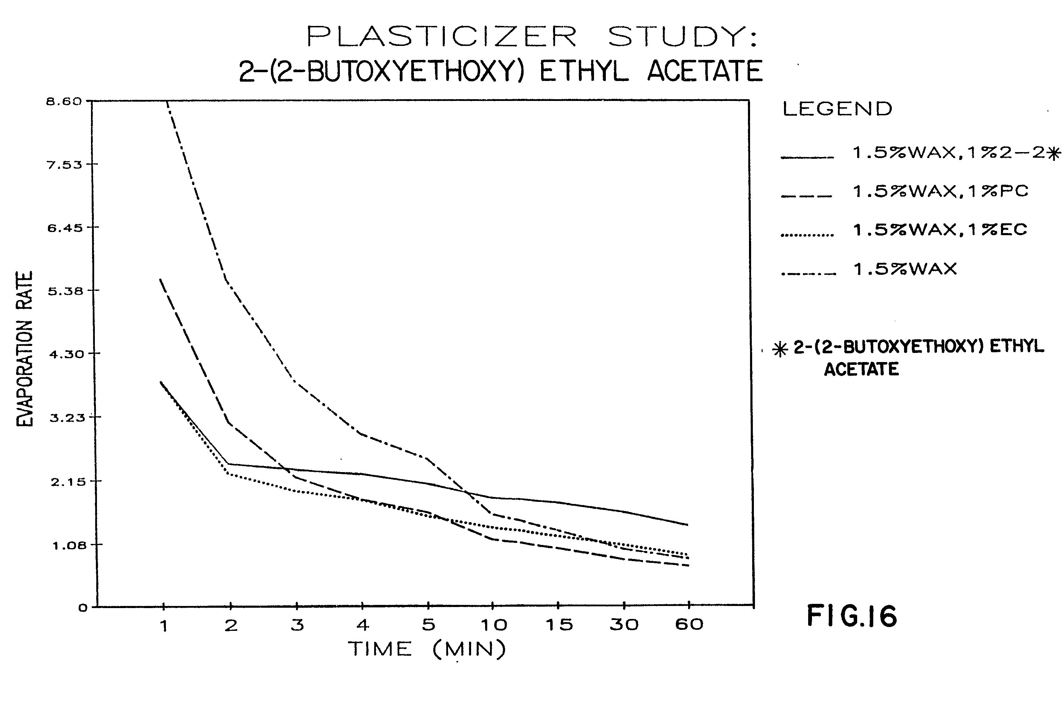

Figures 11 and 16 illustrate in graph form the evaporation rate of methylene chloride from paint stripping formulations containing various plasticizers and wax.

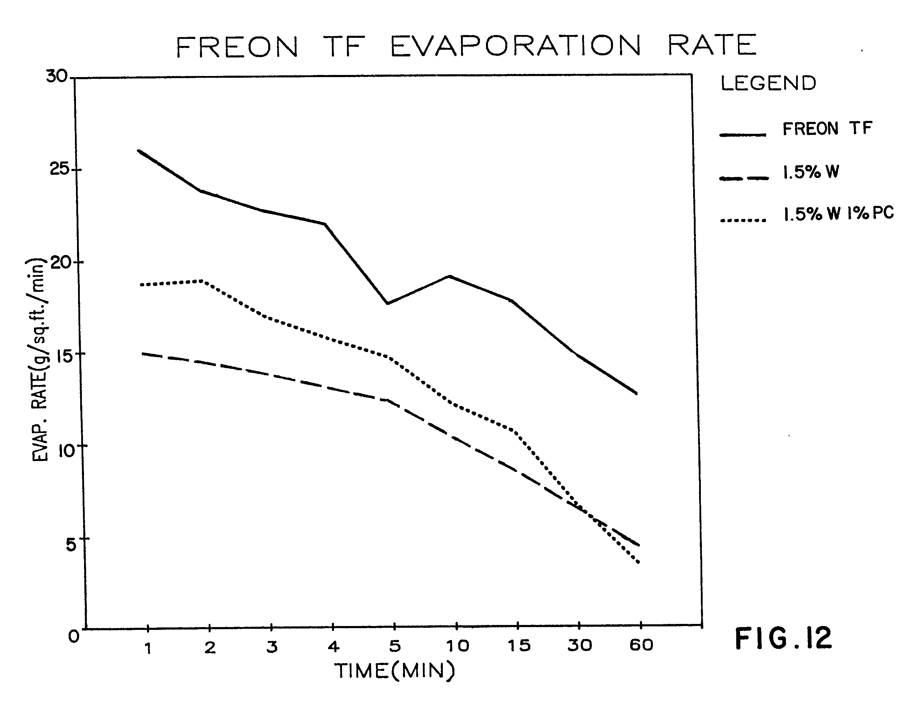

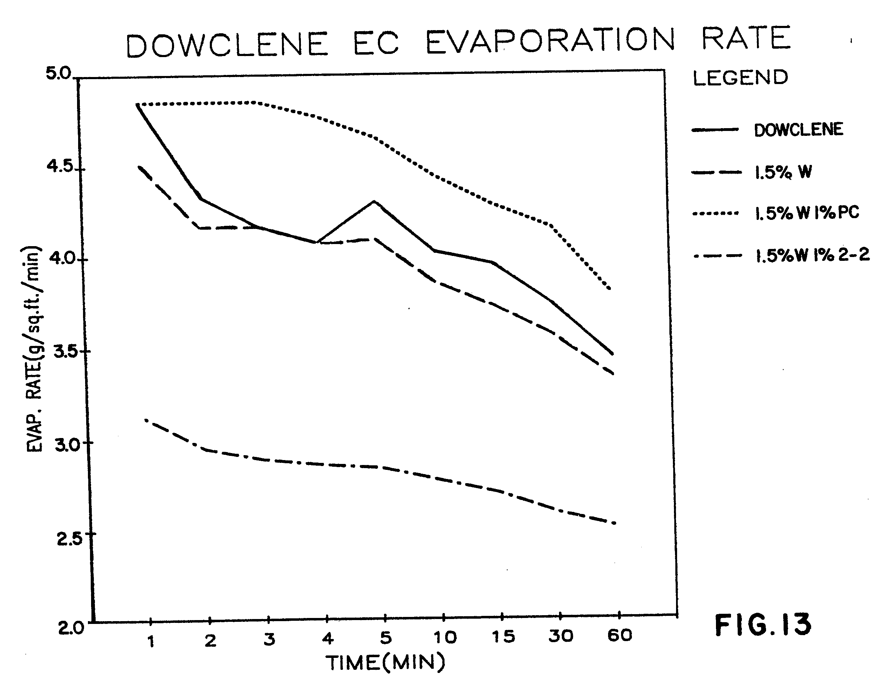

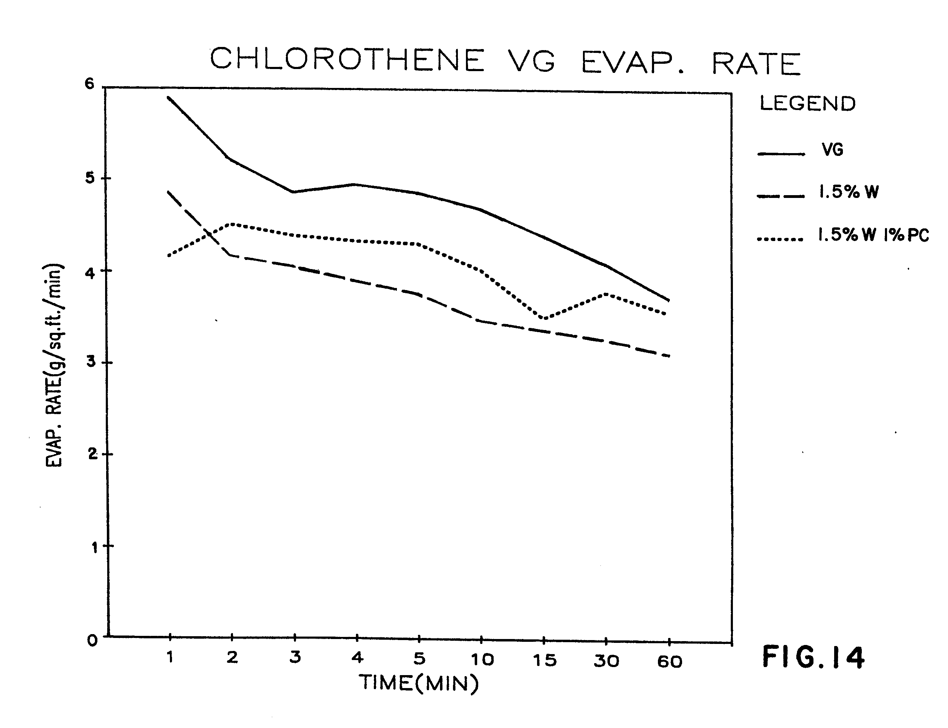

Figures 12-14 illustrate in graph form the results of evaporation studies conducted with other halogenated solvents containing wax and propylene carbonate; and

Figure 15 illustrates in graph form the results of studies using methylene chloride and propylene carbonate with various classes of surfactants.

In accordance with the present invention it has now been found that the rate of evaporation of industrial halogenated solvents, e.g. the chlorinated solvents, particularly methylene chloride, and the fluorine/chlorine-containing solvents, commonly referred to as freons, in a formulation which includes therein a wax, such as a low melting paraffin wax, can be markedly improved with regard to the retardation of evaporation as well as other properties such as the stripping aspect by the addition of at least one of propylene carbonate, ethylene carbonate, and/or a plasticizer, such as dioctyl phthalate or 2-(butoxy-ethoxy)ethyl acetate, or a mixture of two or more of these additives. It has further been found that the addition of 0.5 to 5 percent of a surface active material, or materials having an HLB (hydrophile-lipophile balance) of between 8 and 16, such as an anionic surfactant, e.g. dioctyl sodium sulfo succinate, a non-ionic surfactant, e.g. alkylaryl ether, or silicone surfactant, e.g. U.C.C. L3510, to wax-containing formulations, will also retard the evaporation of the methylene chloride and organic cosolvents normally employed. It is to be understood that other additives commonly included in the many proprietary formulations now being sold by commercial formulators can also be included without detrimentally

0232698

affecting the performance of the here described retardant chemicals. Experimentation has established that best results are obtained by limiting the amounts of the waxes added to between 0.5 and 5.0 percent by weight based on the total weight of the solvents, and preferably between 1 and 3 percent by weight, and the here described additives to between 0.25 and 5.0 percent by weight of the solvents and the waxes and preferably between 1 and 3 percent by weight. While greater amounts of wax may be used, effectiveness of the combination of wax and the here described retardant additive is reduced relative to the amount employed when the total level of retardant additives is raised above 10 to 15 percent. Therefore, the preferred compositions of the present invention are those which contain from 1 to 3 percent and, most preferably, those which contain from 1.0 to 2.5 percent by weight of one or more of the common waxes, such as paraffin wax having a melting point below 150°F (65°C) and from 0.25 to 3 percent by weight and, again, most preferably from 1.0 to 2.5 percent by weight of at least one of propylene carbonate, ethylene carbonate, a surface active material having an HLB of 8 to 16 and/or a plasticizer. In addition, a surface active agent may be added in an amount sufficient to solubilize water in excess of the solubility limits of the solvents, thereby to assist in the prevention of corrosion of metals in storage vats and containers.

The preferred essential additive to the existing wax-containing formulations is the alkylene carbonate(s), such as the ethylene and/or propylene carbonates. Of course, if the formulator does not initially add wax to his formulation, then it is essential that the wax be included as an additive under this invention.

The preferred retardation package for the cold cleaning compositions of course must include the wax to obtain the benefit, since absence of the wax, while the other components of the present invention are present, will accelerate the evaporation rate. Such cold cleaning formulations containing the wax are useful only when the end product may advantageously permit a film of the wax to remain on the surface of the object. Such a film on a metal part is believed to assist in preventing exposure corrosion of the surfaces and thus is advantageous when the object is to be shipped or used without painting or other surface finish. In most instances, the oily residue for which the cold cleaning is intended to remove is removed and replaced by the wax film. It is of course to be understood that if the part or object is to be further coated, then the part must be cleaned again to remove the wax coating or film. However, this is not disadvantageous since many times the object will be stored in the ambient atmosphere for some period of time before the coating process is carried out and, unless surface-treated in some manner, will be subject to corrosion in the ambient atmosphere.

While the surfactant and other plasticizer additives individually and in combination are useful, they do not contribute as much evaporative retardation to the formulation as do the carbonates. They have, however, been found to give added benefits when employed in combination with the carbonates in the formulations.

The presence of alkali metal hydroxides, ammonia and other amines, both aliphatic and aromatic in nature, or the phenols, as well as contact with inorganic salts such as $AlCl_3$, $FeCl_3$ or $ZnCl_2$, should be avoided since various well known reactions occur between these materials and the carbonate(s) and methylene chloride, the latter in the presence of water, which degrades the methylene chloride. As is well known, it is next to impossible to exclude moisture in and around the situs and solvents, such as methylene chloride and the alcohols, have a propensity for picking up moisture.

In its broadest sense, the invention resides in the discovery that the addition of small but effective amounts of at least one of ethylene carbonate, propylene carbonate, and a surface active material having an HLB of 8 to 16 and/or a plasticizer to the basic paint and varnish stripping formulation consisting of methylene chloride and a wax can effectively reduce the rate of evaporation of the solvents, particularly methylene chloride and its often employed polar co-solvent methanol, by a factor of twenty.

The most preferred compositions are those which contain the carbonate and one or the other of the plasticizers or surface active agents.

The following examples are given to illustrate the present invention and are not to be construed as limiting the scope thereof in any manner. All parts and percentages are by weight unless otherwise indicated.

The additives used in the examples are identified as follows:

Freon[1] TF - a fluorochlorohydrocarbon manufactured by duPont.

DOWFAX* 2A1 and 3B2 - alkylated diphenyl oxide disulfonates, highly anionic surfactants manufactured by The Dow Chemical Company.

CHLOROTHENE* VG* - a stabilized grade of methylchloroform.

DOWCLENE* E.C. - a mixture of 75 percent 1,1,1-trichloroethane and 25 percent perchloroethylene, commercially available from The Dow Chemical Company.

Aerosol OTS - Diocytl ester of sodium sulfosuccinic acid, a surfactant manufactured by American Cyanamid Chemical Company.

Witconate[2] KY - alkyl aryl sodium sulfontate, a surfactant manufactured by Witco Chemical Corporation.

L-5310 - an organosilicon surfactant manufactured by Union Carbide Corporation.

[1]Trademark of E. I. du Pont De Nemours
[2]Trademark of Witco Chemical Company
*Trademark of The Dow Chemical Company

Example 1

A series of runs was made to determine the effectiveness of various additives to methylene chloride-based wax-containing paint and varnish stripping formulations to retard the evaporation of the methylene chloride and, where used in combination with polar solvents such as the alcohols, to effectively retard evaporation of these additive solvents also. The tests were run in a two-foot (608.16 mm) square box having one side open to the ambient atmosphere. The test procedure comprised preparing a 100 gram sample of the desired formulation, taking a 25 cc aliquot therefrom and placing it in the tared aluminum weighing dish on a balance beam scale which was inside the box. The vapor concentration was then measured at a point about nine inches (228 mm) above the tared dish. The results obtained using several formulations and a blank are reported in Tables 1 to 5.

Table 1 shows the effectiveness of wax as an evaporation retardant to methylene chloride. Table 2 shows that propylene carbonate by itself did little to retard the evaporation of methylene chloride at 2.5 to 5.0 percent propylene carbonate by weight and practically nothing to retard methylene chloride evaporation at 1.0 percent propylene carbonate by weight. However, the combination of propylene carbonate and wax did a remarkable job at controlling the evaporation of methylene chloride as shown in Table 3. Table 3 also shows that dioctyl phthalate and Aerosol OTS, in combination with wax are also active evaporation retarders. While not as effective as the combination of propylene carbonate and wax, they nonetheless showed strong improvement over wax by nonetheless showed strong improvement over wax by itself as an evaporation retardant for methylene chloride.  Table 4 shows that ethylene carbonate (EC) in combination with wax had little or no improvement at 2.5 percent EC and 2.5 percent wax over wax alone, but had some improvements over the wax alone for the first five minutes at 1.5 percent wax and 1.0 percent EC.

In the tables, $CH_2Cl_2$ is dichloromethane (methylene chloride), EC is ethylene carbonate and PC is propylene carbonate.

## Table 1
### Wax as an Evaporation Retardant
### Methylene Chloride Evaporation Rate
### in g/sq ft./min (kg/m²/min)

| Time (min) | 100% $CH_2Cl_2$ | 5% Wax | 2.5% Wax | 1.5% Wax | 1.0% Wax | 0.5% Wax |
|---|---|---|---|---|---|---|
| 0 | --- | --- | --- | --- | --- | --- |
| 1 | 15 (0.16) | --- | .35 (0.0038) | 12 (0.13) | 12 (0.13) | 14 (0.15) |
| 2 | 15 (0.16) | --- | .17 (0.0018) | 7.6 (0.082) | 7.6 (0.082) | 14 (0.15) |
| 3 | 14 (0.15) | .12 (0.0013) | .12 (0.0013) | 5.3 (0.057) | 5.3 (0.057) | 13 (0.14) |
| 4 | 14 (0.15) | .087 (0.0009) | .17 (0.0018) | 4.0 (0.043) | 4.1 (0.044) | 12 (0.13) |
| 5 | 13 (0.14) | .069 (0.0007) | .14 (0.0015) | 3.2 (0.034) | 3.4 (0.036) | 9.4 (0.01) |
| 10 | 12 (0.13) | .10 (0.0011) | .14 (0.0015) | 1.8 (0.19) | 2.0 (0.022) | 5.0 (0.055) |
| 15 | 11 (0.12) | .12 (0.0013) | .16 (0.0017) | 1.4 (0.015) | 1.6 (0.017) | 4.7 (0.05) |
| 30 | 11 (0.12) | .22 (0.0024) | .23 (0.0025) | 0.77 (0.008) | 1.5 (0.016) | 3.5 (0.038) |
| 60 | 9.8 (0.11) | .42 (0.0045) | .20 (0.0022) | 0.59 (0.006) | 1.4 (0.015) | --- |
| Percent Loss | | | | | | |
| 1 Day | 100% | 48% | 43% | 47% | 56% | 70% |
| 2 Days | | 80% | | | | |

### Table 2
### Accumulative Rates of Evaporation of
### Methylene Chloride ($CH_2Cl_2$) in g/sq.
### ft./min ($kg/m^2/min$)

| Time (min) | 100% $CH_2Cl_2$ | 5% PC | 2.5% PC | 1.0% PC |
|---|---|---|---|---|
| 1 | 16 (0.17) | 12 (0.13) | 12 (0.13) | 16 (0.17) |
| 2 | 16 (0.17) | 12 (0.13) | 11 (0.12) | 14 (0.15) |
| 3 | 14 (0.15) | 11 (0.12) | 10 (0.11) | 13 (0.14) |
| 4 | 14 (0.15) | 10 (0.11) | 10 (0.11) | 12 (0.13) |
| 5 | 12 (0.13) | 9.9 (0.11) | 9.6 (0.1) | 12 (0.13) |
| 10 | 11 (0.12) | 8.7 (0.094) | 8.0 (0.086) | 10 (0.11) |
| 15 | 10 (0.11) | 9.4 (0.1) | 8.2 (0.088) | 9.5 (0.1) |
| 30 | 9.0 (0.11) | 8.3 (0.09) | --- | 8.6 (0.092) |
| 60 | 8.9 (0.1) | --- | --- | 8.0 (0.086) |

PC = Propylene Carbonate

### Table 3
### Accumulative Evaporation Rates of
### Methylene Chloride ($CH_2Cl_2$) in g/sq.
### ft./min ($kg/m^2/min$)

| Time (min) | 100% $CH_2Cl_2$ | 2.5% Wax | 1.5% Wax | 1.5% Wax 1.0% PC | 1.5% Wax 1.0% Dioctyl Phthalate | 1.5% Wax 1.0% Aerosol OTS |
|---|---|---|---|---|---|---|
| 1 | 15 (0.16) | 0.35 (0.0038) | 12 (0.13) | * | 7.3 (0.078) | 3.5 (0.038) |
| 2 | 15 (0.16) | 0.17 (0.0018) | 7.6 (0.082) | * | 3.6 (0.039) | 1.9 (0.02) |
| 3 | 14 (0.15) | 012 (0.0013) | 5.3 (0.057) | * | 2.4 (0.026) | 0.95 (0.102) |
| 4 | 14 (0.15) | 0.17 (0.0018) | 4.0 (0.043) | 0.087 (0.0009) | 1.8 (0.019) | 1.0 (0.11) |
| 5 | 13 (0.14) | 0.14 (0.0015) | 3.2 (0.034) | 0.069 (0.0007) | 1.5 (0.016) | 0.83 (0.0089) |
| 10 | 12 (0.13) | 0.14 (0.0015) | 1.8 (0.019) | 0.035 (0.0004) | 0.8 (0.0086) | 0.52 (0.0056) |
| 15 | 11 (0.12) | 0.16 (0.0017) | 1.4 (0.015) | 0.023 (0.0002) | 0.58 (0.006) | 0.46 (0.0049) |
| 30 | 11 (0.12) | 0.23 (0.025) | 0.77 (0.008) | 0.035 (0.0038) | 0.41 (0.0044) | 0.35 (0.0038) |
| 60 | 9.8 (0.11) | 0.20 (0.0022) | 0.59 (0.006) | 0.029 (0.0003) | 0.32 (0.003) | 0.46 (0.0049) |

\* = Nondetectable

-14-

### Table 4
### Paraffin Oil, Paraffin Oil-Wax, and Ethylene Carbonate-Wax
### As Evaporation Retardants To Methylene Chloride
### Rate of Evaporation of Methylene Chloride ($CH_2Cl_2$) in g/sq. ft./min ($kg/m^2/min$)

| Time (min) | 100% $CH_2Cl_2$ | 2.5% Wax | 2.5% Wax 2.5% EC |
|---|---|---|---|
| 1 | 15 (0.16) | 0.35 (0.0038) | 0.35 (0.0038) |
| 2 | 15 (0.16) | 0.17 (0.0018) | 0.17 (0.0018) |
| 3 | 14 (0.15) | 0.12 (0.0013) | 0.12 (0.0013) |
| 4 | 14 (0.15) | 0.17 (0.0018) | 0.087 (0.0009) |
| 5 | 13 (0.14) | 0.14 (0.0015) | 0.14 (0.0015) |
| 10 | 12 (0.13) | 0.14 (0.0015) | 0.10 (0.0011) |
| 15 | 11 (0.12) | 0.16 (0.0017) | 0.14 (0.0015) |
| 30 | 11 (0.12) | 0.23 (0.0025) | 0.16 (0.0017) |
| 60 | 9.8(0.11) | 0.20 (0.0022) | 0.28 (0.003) |

Percent Loss
| | | | |
|---|---|---|---|
| 1 Day | 100% | 48% | 20% |
| 2 Days | 100% | 80% | 51% |

## Table 5
### Additives to Control Evaporation of
### Methylene Chloride Evaporation Rate in g/sq. ft./min (kg/m²/min)

| Time (min) | 100% $CH_2Cl_2$ | 1.5% Wax | 1% Propylene Carbonate/ 1.5% Wax | 1% Dioctyl- phthalate/ 1.5% Wax | 1% Aerosol OTS 1.5% Wax | 1.0%. Witconate KX 1.5% Wax | 1.0% EC 1.5% WA |
|---|---|---|---|---|---|---|---|
| 1 | 15 (0.16) | 12 (0.13) | * | 7.3 (0.078) | 3.5 (0.038) | 1.7 (0.018) | 1.7 (0.018) |
| 2 | 15 (0.16) | 7.6 (0.082) | * | 3.6 (0.039) | 1.9 (0.02) | 2.6 (0.028) | 1.2 (0.013) |
| 3 | 14 (0.15) | 5.3 (0.057) | * | 2.4 (0.026) | 0.95 (0.102) | 2.8 (0.03) | 1.0 (0.011) |
| 4 | 14 (0.15) | 4.0 (0.043) | 0.087 (0.0009) | 1.8 (0.019) | 1.0 (0.011) | 2.8 (0.03) | 0.95 (0.01) |
| 5 | 13 (0.14) | 3.2 (0.034) | 0.069 (0.0007) | 1.5 (0.016) | 0.83 (0.0089) | 2.8 (0.03) | 1.0 (0.011) |

* = Nondetectable

Table 5 continued

| Time (min) | 100% CH$_2$Cl$_2$ | 1.5% Wax | 1% Propylene Carbonate/ 1.5% Wax | 1% Dioctyl- phthalate/ 1.5% Wax | 1% Aerosol OTS 1.5% Wax | 1.0%. Witconate KX 1.5% Wax | 1.0% EC 1.5% WA |
|---|---|---|---|---|---|---|---|
| 10 | 12 (0.13) | 1.8 (0.019) | .035 (0.0004) | 0.8 (0.0086) | 0.52 (0.0056) | 2.6 (0.028) | 0.87 (0.009) |
| 15 | 11 (0.12) | 1.4 (0.015) | .023 (0.0002) | 0.58 (0.006) | 0.46 (0.0049) | 2.4 (0.026) | 0.85 (0.009) |
| 30 | 11 (0.12) | 0.77 (0.008) | .035 (0.0038) | 0.41 (0.0044) | 0.35 (0.0038) | 2.6 (0.028) | 0.74 (0.008) |
| 60 | 9.8 (0.11) | 0.59 (0.006) | .029 (0.0003) | 0.32 (0.003) | 0.46 (0.0049) | 2.6 (0.028) | 0.76 (0.0082) |

* = Nondetectable

Example 2

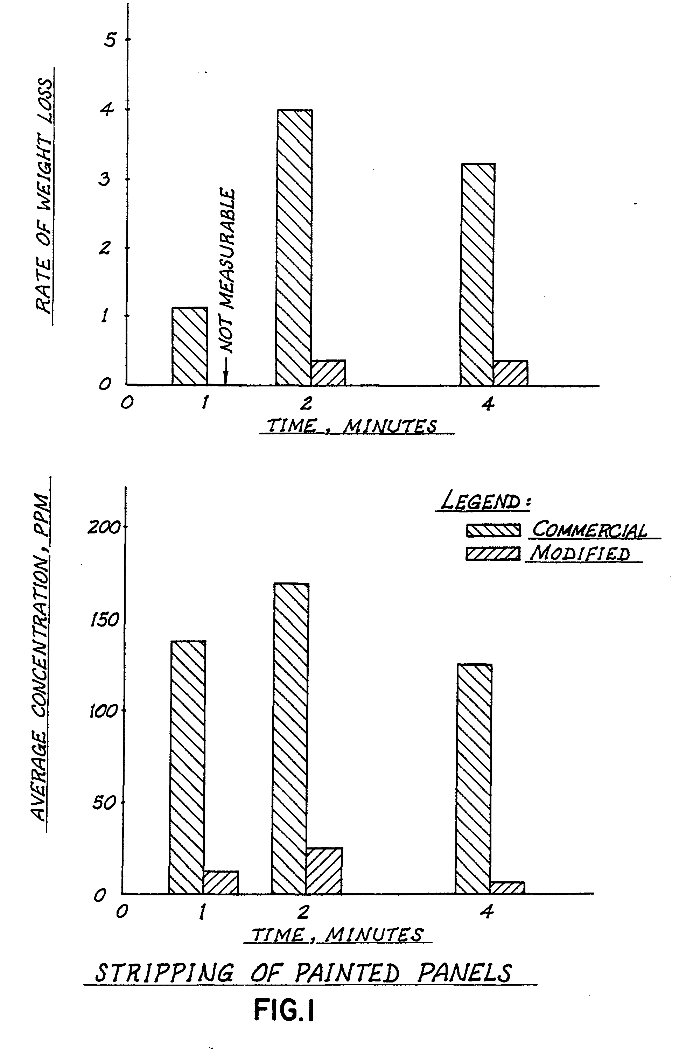

In another series of tests, a commercial formulation was purchased and used to strip an epoxy paint from metal panels. The formulation contained 75.8 percent by weight methylene chloride, 2.3 percent toluene, 0.1 percent wax, 0.8 percent methocel 20, percent glacial acetic acid and 1.0 percent water  To this formulation were added 1.0 percent by weight propylene carbonate and 1.5 percent by weight wax. The resulting compositions were tested after 1 minute, 2 minutes and 4 minutes contact with the panel. The panel weight loss and vapor concentration were then measured. The results are shown graphically in Figure 1 along with the results obtained in tests using the commercial formulation as a basis for comparison.

Example 3

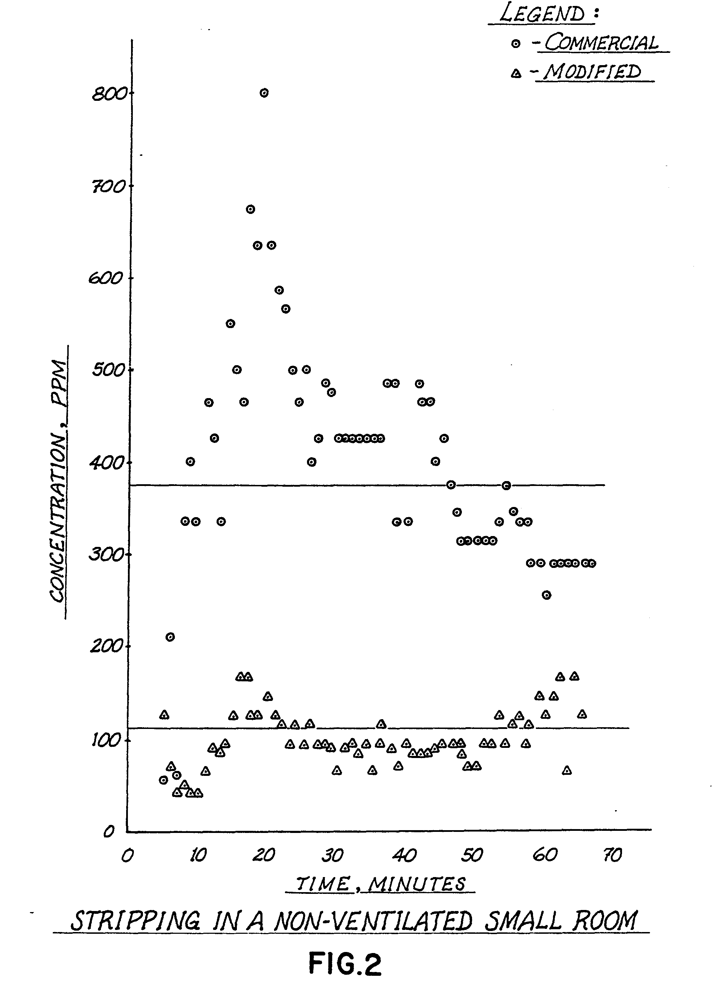

In another test, a quantity of a commercial paint stripper was used to strip the paint from a laboratory cart. One-half of the paint stripper was mixed with 1.0 percent by weight propylene glycol and 1.5 percent by weight wax. The remaining half was left unaltered. The laboratory cart was marked in half sections and one section was stripped with the unaltered paint stripper. The stripping was conducted in a 9 by 11 foot (2.7 by 3.4 m) non-ventilated room with an 8-foot (2.4 m) ceiling. During the stripping step, the concentration of methylene chloride vapors in the air inside the room was measured and found to be 376 parts per million. After ventilating the room to remove all of the methylene vapors, the test procedure

34,685A-F

was repeated using the unaltered half of the stripper to strip the other half of the cart. The concentration of the methylene chloride vapors in the air inside the room was measured during the stripping step and found to be 107 parts per million. The results of the test are shown in Figure 2.

Example 4

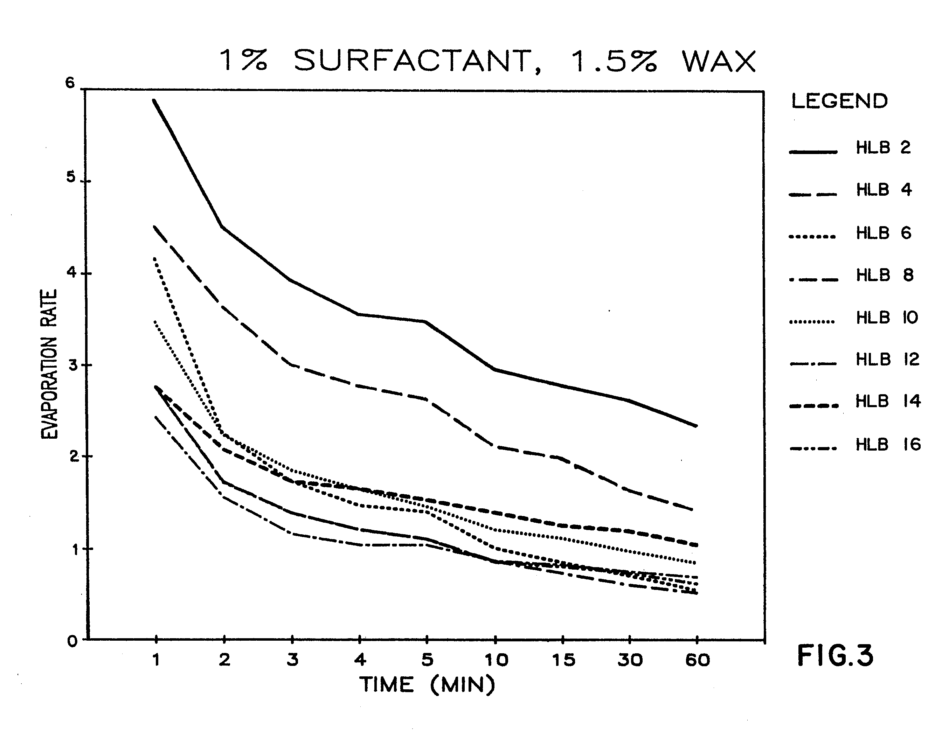

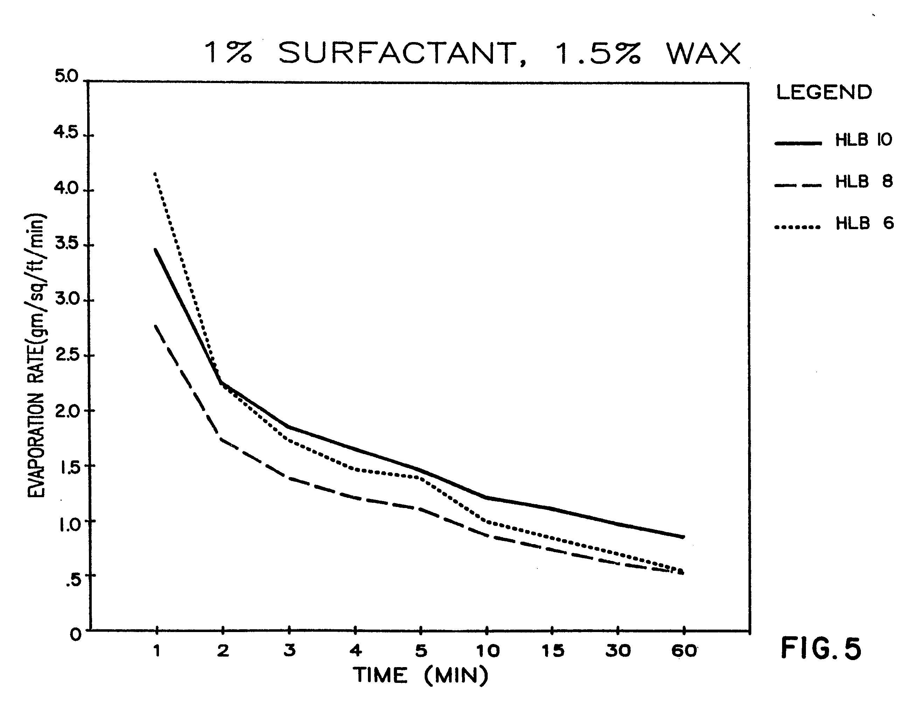

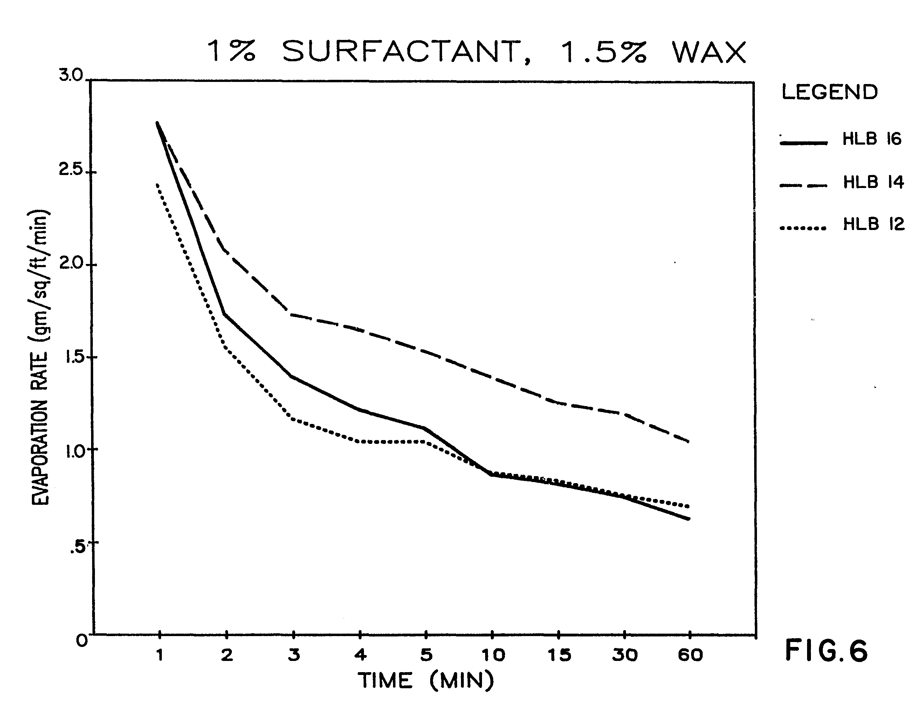

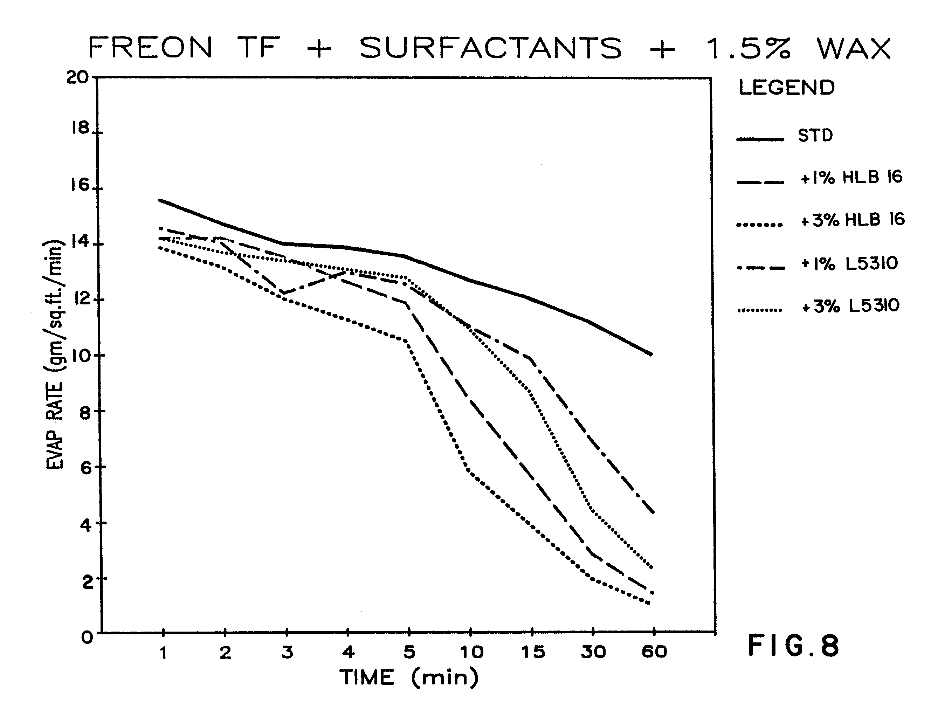

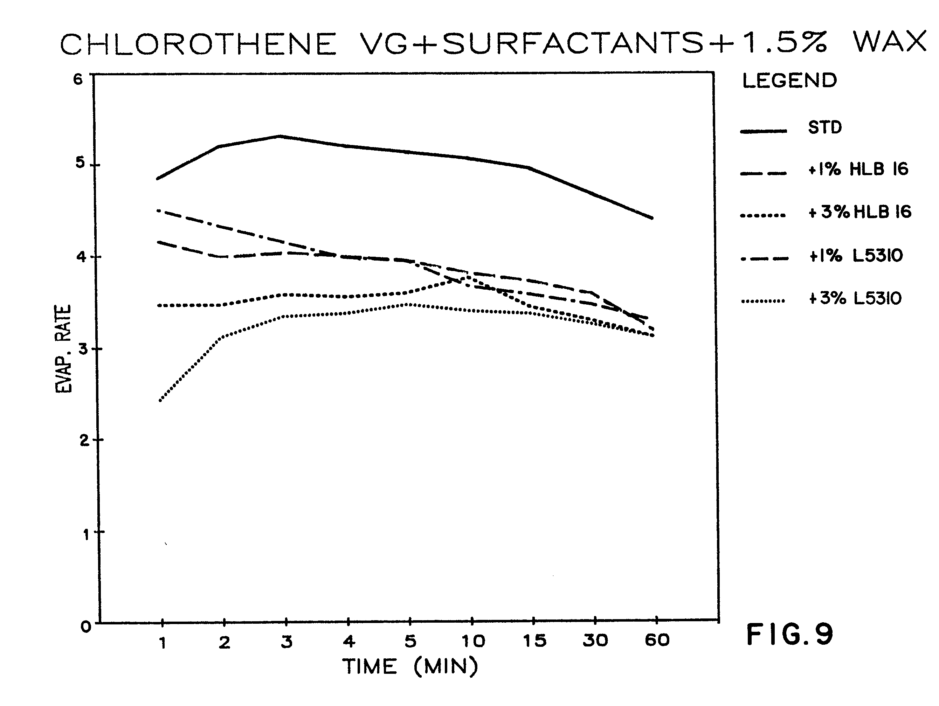

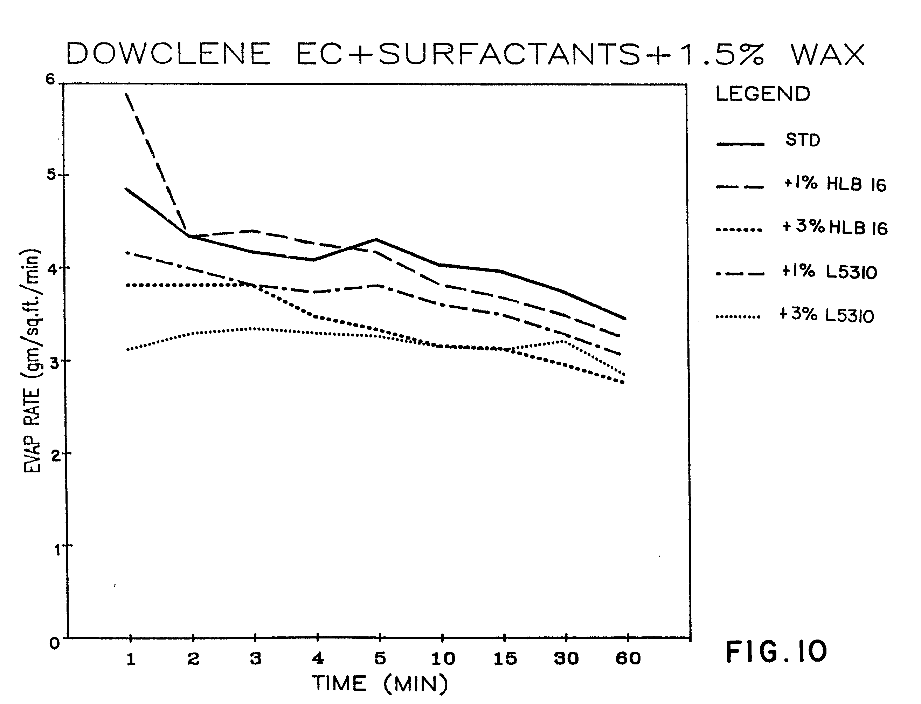

A number of surface active agents were tested for their effectiveness in combination with the waxes as evaporation retardants for a number of the industrial solvents. The results of such tests are illustrated in Figures 3 to 10 and 15. The data illustrated in the figures show the following:

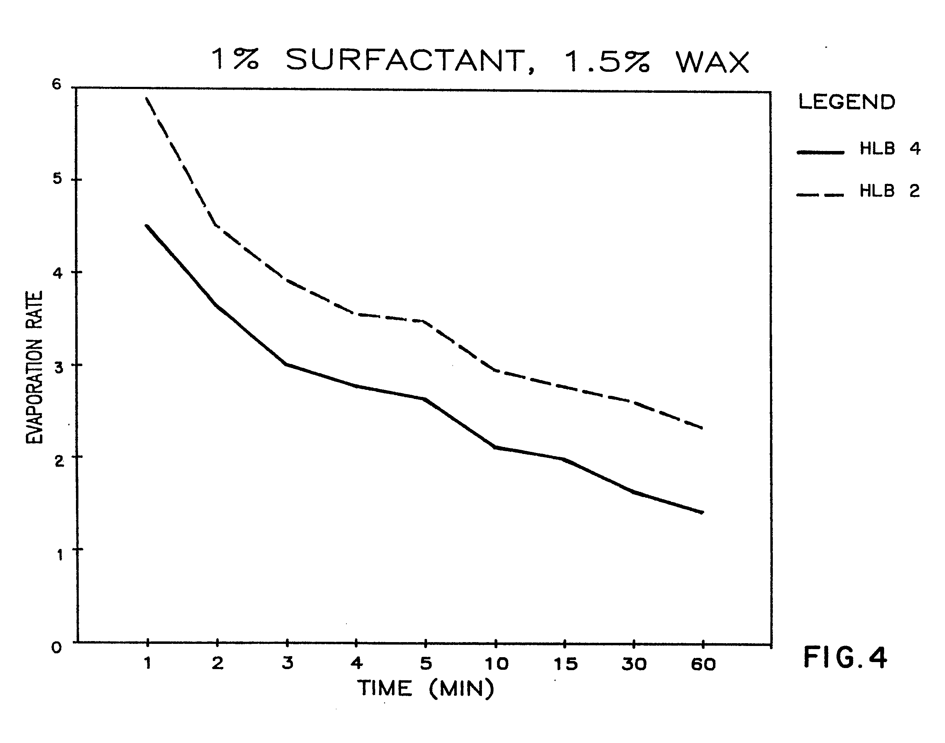

(1) When using a non-ionic surfactant, the higher the HLB (hydrophilic-lipophilic balance) value the more effective such surfactants are in retarding evaporation. The data show little difference between HLB 12 and HLB 16. (Figures 4-6).

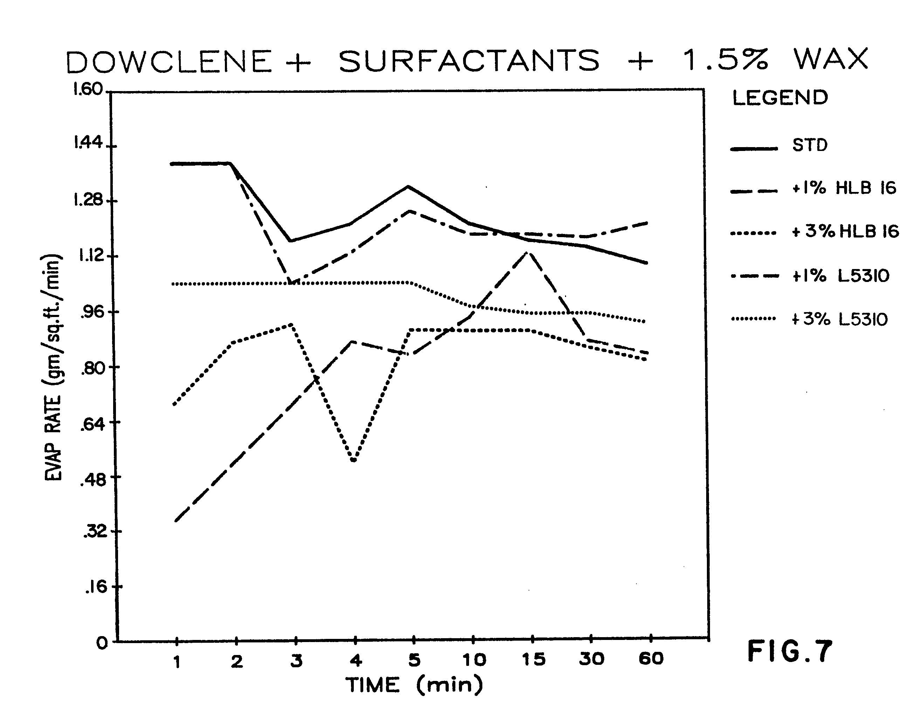

(2) Organosilicon surfactants work well with all of the halogenated solvents. (Figures 7-10).

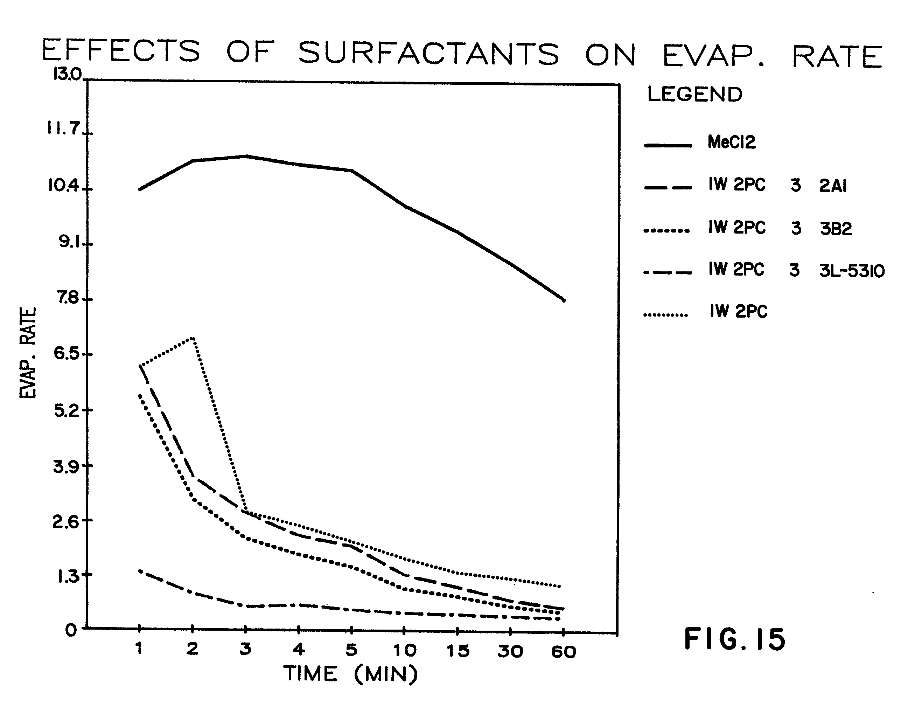

(3) Highly anionic surfactants, such as DOWFAX 2A1 and 3B2 which are alkyl aryl ethers also work well, although not as well as the organosilicon L-5310 in methylene chloride. (Figure 15).

(4) An HLB 16 surfactant is better than L-5310 in perchloroethylene and Freon TF. In Chlorothene VG (a stabilized grade of methylchloroform) the HLB 16 surfactant and the organosilicon are about equal, and in DOWCLENE E.C. and methylene chloride L-5310, the organosilicon surfactant is slightly better than the HLB 16 surfactant (Figures 7-10).

# CLAIMS

1. A composition having a low volatilization rate which comprises, as a major component, a halogenated hydrocarbon solvent or a fluorochlorohydrocarbon solvent, a natural or synthetic wax and at least one additive comprising ethylene carbonate, propylene carbonate, an organic silicon copolymer surface active compound, surface active compounds having an HLB of from 8 to 16 and/or a plasticizer.

2. A composition as claimed in Claim 1 wherein the chlorinated solvent is methylene chloride, methylchloroform, perchlorethylene or mixtures of methylchloroform and perchloroethylene.

3. A composition as claimed in Claim 1 wherein the additive is propylene carbonate or ethylene carbonate.

4. A composition as claimed in Claim 1 wherein the additive is a plasticizer.

5. A composition as claimed in Claim 4 wherein the plasticizer is 2-(2-butoxyethoxy)ethyl acetate.

6. A composition as claimed in Claim 1 wherein the additive is a mixture of propylene carbonate, a surface active compound having an HLB of from 8 to 16 and/or a plasticizer.

7. A composition as claimed in Claim 1 wherein the surface active compound is an organic silicon polymer.

8. A composition as claimed in any of the preceding claims wherein the surface active compound is a non-ionic alkyl aryl ether surface active compound having an HLB of between 8 and 12 or an anionic surface active compound having an HLB of between 8 and 12.

9. A composition as claimed in Claim 1 wherein the additive is dioctyl sodium sulfosuccinate or dioctylphthalate.

10. A composition as claimed in Claim 1 wherein the halogenated solvent is Freon TF.

0232698

STRIPPING OF PAINTED PANELS

FIG.1

STRIPPING IN A NON-VENTILATED SMALL ROOM

FIG.2

# 1% SURFACTANT, 1.5% WAX

FIG.3

LEGEND

——— HLB 2

— — HLB 4

······· HLB 6

—·— HLB 8

········· HLB 10

—·—·— HLB 12

— — — HLB 14

—··—··— HLB 16

*Y-axis: EVAPORATION RATE (0 to 6); X-axis: TIME (MIN) — 1, 2, 3, 4, 5, 10, 15, 30, 60*

# 1% SURFACTANT, 1.5% WAX

**LEGEND**

—— HLB 4

— — HLB 2

EVAPORATION RATE vs TIME (MIN)

FIG.4

0232698

## 1% SURFACTANT, 1.5% WAX

LEGEND

——— HLB 10

— — — HLB 8

········ HLB 6

FIG.5

0232698

1% SURFACTANT, 1.5% WAX

LEGEND

——— HLB 16

— — — HLB 14

······· HLB 12

FIG. 6

0232698

DOWCLENE + SURFACTANTS + 1.5% WAX

FIG.7

LEGEND

— STD

— — +1% HLB 16

········ +3% HLB 16

—·—·— +1% L5310

·········· +3% L5310

Y-axis: EVAP RATE (gm/sq.ft./min)

X-axis: TIME (min)

0232698

FREON TF + SURFACTANTS + 1.5% WAX

LEGEND

——— STD

— — +1% HLB 16

········ +3% HLB 16

—·—· +1% L5310

·········· +3% L5310

EVAP RATE (gm/sq.ft./min)

TIME (min)

FIG.8

CHLOROTHENE VG+SURFACTANTS+1.5% WAX

FIG.9

LEGEND

STD
+1% HLB 16
+3% HLB 16
+1% L5310
+3% L5310

EVAP. RATE

TIME (MIN)

0232698

DOWCLENE EC+SURFACTANTS+1.5% WAX

EVAP RATE (gm/sq.ft./min) vs TIME (MIN)

LEGEND

| | |
|---|---|
| STD | |
| +1% HLB 16 | |
| +3% HLB 16 | |
| +1% L5310 | |
| +3% L5310 | |

FIG. 10

10/15

0232698

1% ADDITIVE, 1.5% WAX IN MeCl2

FIG.II

0232698

LEGEND

— STD
— — PM
·········· EEA
—·—· BCA
··········· EC

FREON TF EVAPORATION RATE

FIG.12

DOWCLENE EC EVAPORATION RATE

FIG.13

0232698

CHLOROTHENE VG EVAP. RATE

FIG.14

LEGEND

——— VG

— — 1.5% W

········ 1.5% W 1% PC

EVAP. RATE(g/sq.ft./min)

TIME(MIN)

0232698

EFFECTS OF SURFACTANTS ON EVAP. RATE

LEGEND

——— MeCl2

— — IW 2PC 3 2AI

········· IW 2PC 3 3B2

—·— IW 2PC 3 3L-5310

·········· IW 2PC

FIG. 15

0232698

PLASTICIZER STUDY:
2-(2-BUTOXYETHOXY) ETHYL ACETATE

LEGEND

——— 1.5%WAX,1%2-2✳

— — — 1.5%WAX,1%PC

............ 1.5%WAX,1%EC

.—..—..— 1.5%WAX

✳ 2-(2-BUTOXYETHOXY) ETHYL ACETATE

FIG.16

0232698